# EUROPÄISCHE PATENTSCHRIFT

(11) **EP 0 940 048 B1**
(45) Veröffentlichungstag und Bekanntmachung des Hinweises auf die Patenterteilung: **15.02.2006**
(21) Anmeldenummer: 97947713.0
(22) Anmeldetag: 03.11.1997
(51) Int. Cl.: H04Q 3/66

(54) **VERFAHREN UND ROUTING-SYSTEM ZUR DYNAMISCHEN VERKEHRSLENKUNG IN EINEM KOMMUNIKATIONSNETZ**
METHOD AND SYSTEM OF DYNAMIC TRAFFIC CONTROL IN A COMMUNICATION NETWORK
PROCEDE ET SYSTEME D'ORGANISATION DYNAMIQUE DU TRAFIC DANS UN RESEAU DE COMMUNICATION

(30) Priorität: 22.11.1996 DE 19648478
(43) Veröffentlichungstag der Anmeldung: 08.09.1999
(73) Patentinhaber: SIEMENS AKTIENGESELLSCHAFT, 80333 München (DE)
(72) Erfinder: STADEMANN, Rainer, D-85658 Egmating (DE)
(86) Internationale Anmeldenummer: PCT/DE1997/002544
(87) Internationale Veröffentlichungsnummer: WO 1998/024246

(56) Entgegenhaltungen:
- EP-A- 0 229 494
- EP-A- 0 696 147
- WO-A-93/08666
- US-A- 4 669 113
- US-A- 5 142 570
- LANGNICKEL B-U ET AL: "AUF ALTERNATIVWEGEN ZU MEHR GEWINN" TELCOM REPORT, Bd. 18, Nr. 5, 1.September 1995, Seiten 244-247, XP000543148
- HARTMANN H L: "DYNAMISCHE NICHTHIERARCHISCHE VERKEHRSLENKUNG" NACHRICHTENTECHNISCHE ZEITSCHRIFT (NTZ), Bd. 44, Nr. 10, 1.Oktober 1991, Seite 724-726, 728, 730-732 XP000265354

## Beschreibung

Die Erfindung betrifft ein Verfahren und ein Routing-System zur dynamischen Verkehrslenkung in einem Kommunikationsnetz

In einem vollvermaschten nicht hierarchischen Netz mit n-Netzknoten existieren zu jedem Ursprungs-Ziel-Paar n-2 Alternativwege mit nur 2 Wegeabschnitten. Von diesen netzweit insgesamt n x (n-1) x (n-2) Alternativwegen sind bei schief belastetem Netz einige Wege unterbelastet, andere Wege überbelastet.

Nichthierarchisch organisierte, leitungsvermittelnde Kommunikationsnetze benötigen eine dynamische Leitweglenkung (dynamic routing), die sich an die jeweilige im Netz vorliegende Verkehrslast so anpaßt, daß der Netzdurchsatz optimiert wird. Dabei müssen insbesondere auch Schieflastsituationen durch die Leitweglenkung entschärft werden.

So wie bei der konventionellen Leitweglenkung in hierarchischen Netzen wird auch bei einer dynamischen Leitweglenkung erst versucht, Verbindungen über einen oder mehrere Planwege, die zumeist Direktwege sind, aufzubauen. Ist dies nicht möglich, weil z.B. alle Verbindungsleitungsbündel des Direktweges vollständig belegt sind, wird der Überlaufverkehr Alternativwegen zugewiesen.

In der Auswahl der Alternativwege liegt der prinzipielle Unterschied zwischen dynamischer und konventioneller Leitweglenkung. Bei der konventionellen Leitweglenkung werden administrativ festgelegte Alternativwege in starrer Reihenfolge nach einer unbelegten Leitung bzw. einem unbelegten Kanal abgesucht ("fixed alternate routing"). Dadurch kann die Leitweglenkung nur sehr ungenügend auf nicht geplante, außergewöhnliche Lastsituationen reagieren.

Bei der dynamischen Leitweglenkung wird entstehender Überlaufverkehr einem oder mehreren aktiven Alternativwegen zugewiesen. Dieser aktive Alternativweg bzw. diese aktiven Alternativwege sind nicht fest, sondern werden entsprechend dem jeweiligen Verfahren zur dynamischen Leitweglenkung ausgewählt oder sogar bei jedem Call neu bestimmt. Die Vorteile der dynamischen Leitweglenkung liegen in Robustheit und Flexibilität gegenüber Schieflastsituationen im Netz, die z.B. durch zeitlich schwankende Lasten (räumlich begrenztes starkes Verkehrsaufkommen z.B. bei Katastrophen) und Netzdegradierung (Verbindungsleitungsbündelausfälle, Ausfälle von Vermittlungseinheiten) entstehen können. Außerdem können Unsicherheiten bei der Netzplanung besser kompensiert werden.

Zentrale zustandsgesteuerte (dynamische) Routingverfahren stützen sich auf einen netzzentralen Prozessor, der von den Netzknoten Informationen über die vorliegende lokale Lastsituation erhält. Günstige, unterbelastete Wege können so zentral bestimmt und an die Netzknoten entsprechend benachrichtigt werden. Nachteilig ist dabei unter anderem der große Aufwand für Netzzentrale, Datenübertragung und zusätzlich benötigte Rechenkapazität in den Netzknoten.

Dezentrale, zustandsgesteuerte (dynamische) Verfahren basieren auf der Rückmeldung von Belastungszuständen der trunk-groups zum Ursprungsknoten des nicht hierarchischen (Teil-)Netzes. Diese Verfahren haben den Nachteil, daß die nicht standardisierte Schnittstelle zwischen den Netzknoten ein homogenes Netz (z.B. Netzknoten nur eines Herstellers) erfordert und außerdem ein hoher Signalisierungsaufwand erforderlich ist.

Dezentrale ereignis-gesteuerte (dynamische) Routingverfahren können eine Perfonrancsteigerung erzielen, indem sie die jeweilige Lastsituation durch Auswertung der Gassenbesetzt-Ereignisse (Blockierungsereignisse) erlernen. Dabei wird jedoch nicht zwischen sporadischen Blockierungen (hervorgerufen durch statistische Schwankungen des angebotenen Verkehrs) und fast vollständiger Blockierung (hervorgerufen durch Schieflast oder partielle Netzüberlast) unterschieden.

Aus der europäischen Anmeldung EP 0 696 147 Al (SAG-intern 94P1542E) ist ein dezentrales ereignisgesteuertes Verfahren nach dem Oberbegriff des Anspruchs 1 bekannt. Da bei einer Reinitialisierung die Alternativwege erneut ausgewählt werden und man bei der Auswahl keine Statusinfo hat, kann es bei diesem Verfahren vorkommen, daß Alternativwege wieder reaktiviert werden, die längerfristig blockiert sind. Bei diesen reaktivierten Alternativwege wird deshalb bei einem erneuten Anbieten von Calls entweder bereits beim ersten Call oder zumindest nach wenigen Calls festgestellt werden, daß der Alternativweg nicht mehr verfügbar ist und daß er deshalb wieder aus dem Wegefächer entfernt werden muß.

Der Erfindung liegt die Aufgabe zugrunde, die genannten Nachteile zu vermeiden bzw. Überlaufverkehr besser als bisher gleichmäßig auf möglichst niedrigbelastete Alternativwege zu verteilen.

Diese Aufgabe wird durch die Merkmale des Anspruchs 1 bzw. des Anspruchs gelöst.

Durch das erfindungsgemäße Verfahren wird erreicht, daß hochbelastete Alternativwege nicht so schnell wieder in den Wegefächer aufgenommen werden wie niedriger belastete Alternativwege.

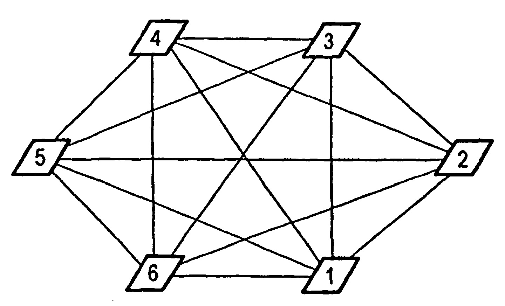

Im folgenden wird ein Ausführungsbeispiel des erfindungsgemäßen Verfahrens anhand der Figur näher erläutert.

Die Figur zeigt ein Diagramm eines kleinen vollvermaschten Netzwerks mit sechs Netz-Vermittlungsknoten und den entsprechenden Kapazitäten der Wegabschnitte(Links) zwischen den Netzknoten, wobei ein Link mindestens ein Verbindungsleitungsbündel umfaßt.

Es werde nun angenommen, daß der Vermittlungsknoten 1 einen Call für Vermittlungsknoten 2 hat, aber die direkte Route zwischen den beiden Vermittlungsknoten nicht verfügbar ist.

Weiter werde angenommen, daß der initiale Wegefächer, d.h. der Fächer der aktiven Alternativwege nach seiner letztmaligen Reinitialisierung, drei Alternativwege umfaßt, nämlich die Zweilink-Alternativwege über die Vermittlungsknoten 3, 4 und 5.

Es werde weiterhin davon ausgegangen, daß der überlaufende Verkehr vom Routing-System zyklisch auf diese aktiven Alternativwege gleichmäßig verteilt wird und zwar in der Reihenfolge Transitknoten 3, 4 und 5.

Unter den genannten Voraussetzungen überprüft das Routing-System am Vermittlungsknoten 1 zunächst, ob der aktive Alternativweg über Transitknoten 3 verfügbar ist, d.h. ob er belegbare freie Leitungen bzw. Kanäle aufweist (im folgenden wird nur von "Kanälen" gesprochen).

Um dies überprüfen zu können, speichert das Routing-System in Vermittlungsknoten 1 die maximale Kapazität des Links zwischen Vermittlungsknoten 1 und 3, nämlich z.B. 125 Kanäle und den für diesen Link zugehörigen Trunk-Reservation-Parameter, der hier beispielsweise 10 sei. Das Routing-System speichert darüber hinaus die Anzahl der momentan benutzten Kanäle. Der Link zwischen Vermittlungsknoten 1 und 3 ist somit aus der Sicht des Routing-Systems dann für Überlaufverkehr verfügbar, wenn die Summe der benutzten Kanäle und des Trunk-Reservation-Parameters kleiner als 125 ist (die Trunkreservierung garantiert die Stabilität eines Routing-Verfahrens im Hochlastbereich).

Ist der erste Link verfügbar, so baut der Vermittlungsknoten 1 die Verbindung zunächst bis zum Vermittlungsknoten 3 auf. Das Routing-System des Vermittlungsknotens 3 prüft dann vor der Weiterführung des Verbindungsaufbaus zum Ziel-Vermittlungsknoten 2 die Verfügbarkeit des zweiten Links, indem es überprüft, ob die Summe von belegte Kanäle plus Trunk-Reservation-Parameter kleiner als die Kapazität des zweiten Links ist(Das Routing-System des Vermittlungsknotens 3 kennt hierzu die maximale Kapazität des Links zwischen Vermittlungsknoten 3 und 2, den Trunk-Reservation Parameter dieses Links und die Anzahl der momentan belegten Kanäle dieses Links).

Falls auch der zweite Link des genannten aktiven Alternativweges verfügbar ist, wird die Verbindung vom Transitknoten 3 zum Zielknoten 2 aufgebaut.

Im dem genannten Fall der erfolgreichen Vermittlung des Calls über Transitknoten 3 wird beim nächsten Call für den Vermittlungsknoten 2 bei Nichtverfügbarkeit der direkten Route nochmals versucht, den überlaufenden Call über den Transitknoten 3 zu lenken. Die Zahl der dem Alternativweg unmittelbar nacheinander erfolgreich angebotenen Calls wird gezählt. Erst bei Erreichen einer vorgegebbaren Maximalzahl von erfolgreich angebotenen Calls wird zyklisch gewechselt, d.h. der nächsfolgende überlaufende Call wird dann über den nächsten aktiven Alternativweg gelenkt, d.h. den aktiven Alternativweg über Transitknoten 4. Dadurch können kurzzeitige Autokorrelationen im Verkehrsangebot auf dem zweiten Link genutzt werden, die die Wahrscheinlichkeit erhöhen, daß unmittelbar nach einem erfolgreichen Verbindungsaufbau eine weitere Verbindung auf dem gleichen Weg aufgebaut werden kann.

wird vor oder bei Erreichen der genannten Maximalzahl die Nichtverfügbarkeit eines Alternativwegs festgestellt (Transitknoten 3 stellt z.B. fest, daß der Link zum Zielknoten 2 nicht verfügbar ist und löst den Verbindungsabschnitt zum Ursprungsknoten 1 mit einer speziell gekennzeichneten Rückwärtsmeldung (crankback-Meldung) aus), so wird der Alternativweg aus dem Wegefächer entfernt.

Der entfernte Alternativweg wird in eine erste Menge (sogenannte erste Passiv-Menge) von Alternativwege aufgenommen, wenn die Zahl der dem Alternativweg erfolgreich angebotenen Calls unter einem bestimmten Wert liegt und in eine zweite Passiv-Menge von Alternativwegen aufgenommen, wenn die genannte Zahl den bestimmten Wert erreicht oder übersteigt.

Der Wegefächer wird nach Eintreten eines bestimmten Ereignisses (z.B. Kommando von Netzmanagement oder Ablauf einer Zeitperiode) und/oder einer bestimmten Bedingung (z.B. Unterschreiten einer vorgegebenen Zahl von Alternativwegen im Wegefächer) reinitialisiert, indem Alternativwege zunächst aus der ersten Passiv-Menge erneut in den Wegefächer aufgenommen werden und, falls dies zum Auffüllen des Wegefächers nicht ausreicht, auch Alternativwege aus der zweiten Passiv-Menge erneut in den Wegefächer aufgenommen werden, wobei die genannte Aufnahme der Alternativwege gemäß der zeitlichen Reihenfolge ihrer Deaktivierung, d.h. ihrer Entfernung aus dem Wegefächer, erfolgt.

Falls der Transitknoten 3 feststellt, daß der Link zum Zielknoten 2 (zweiter Link) nicht verfügbar ist, löst Transitknoten 3 den Verbindungsabschnitt zum Ursprungsknoten 1 mit einer speziell gekennzeichneten Rückwärtsmeldung (crankback-Meldung) aus. Das Routing-System des Ursprungsknotens 1 entfernt daraufhin den Alternativweg über Transitknoten 3 aus dem Wegefächer für Zielknoten 2. Der wegen der Nichtverfügbarkeit auf dem zweiten Link aus dem Wegefächer entfernte Alternativweg wird wiederum wie oben erläutert behandelt.

## Patentansprüche

1. Verfahren zur dynamischen Verkehrslenkung in einem Kommunikationsnetz, demgemäß
a) Calls zwischen einem Ursprungs-Vermittlungsknoten und einem Ziel-Vermittlungsknoten zunächst einem oder mehreren bevorzugten Planwegen angeboten werden,
b) für den Fall, daß keiner der Planwege verfügbar ist, Calls Alternativwegen, die in einem Wegefächer enthalten sind, nach einem bestimmten Auswahlschema angeboten werden, wobei
c) einem aus dem Wegefächer für den Überlaufverkehr ausgewählten Alternativweg überlaufende Calls bis zu einer vorgegebenen Maximalzahl angeboten wird, bevor zu dem nach dem Auswahlschema nächsten Alternativweg übergegangen wird,
d) ein bisher in dem Wegefächer enthaltener Alternativweg aus dem Wegefächer entfernt wird, sobald beim Anbieten eines Calls festgestellt wird, daß er nicht mehr verfügbar ist,
e) der Wegefächer nach Eintreten eines bestimmten Ereignisses und/oder Erfüllen einer bestimmten Bedingung reinitialisiert wird,
**dadurch gekennzeichnet, daß**
f) die Anzahl der dem Alternativweg bis zum Feststellen der Nichtverfügbarkeit angebotenen Calls gezählt wird,
g) der entfernte Alternativweg in eine erste Passiv-Menge von Alternativwegen aufgenommen wird, wenn die genannte Anzahl unter einem bestimmten Wert liegt,
h) der entfernte Alternativweg in eine zweite Passiv-Menge von Alternativwegen aufgenommen wird, wenn die genannte Anzahl den bestimmten Wert erreicht oder übersteigt,
i) der Wegefächer reinitialisiert wird, indem Alternativwege aus der ersten Passiv-Menge erneut in den Wegefächer aufgenommen werden,
j) der Wegefächer reinitialisiert wird, indem auch Alternativwege aus der zweiten Passiv-Menge erneut in den Wegefächer aufgenommen werden, wenn der Wegefächer allein mit Alternativwegen aus der ersten Passiv-Menge nicht bis zu einer bestimmten Mindestzahl aufgefüllt werden kann.

2. Verfahren nach Anspruch 1,
**dadurch gekennzeichnet, daß**
der bestimmte Wert gleich Eins ist.

3. Verfahren nach Anspruch 1 oder 2,
**dadurch gekennzeichnet, daß**
a) die zeitliche Reihenfolge, nach der die Alternativwege aus dem Wegefächer entfernt werden, festgehalten wird,
b) bei einer Reinitialisierung diese zeitlichen Reihenfolge berücksichtigt wird.

4. Verfahren nach einem der Ansprüche 1 bis 3,
**dadurch gekennzeichnet, daß**
ein aus dem Wegefächer entfernter Alternativweg nicht ersetzt wird.

5. Verfahren nach einem der Ansprüche 1 bis 3,
**dadurch gekennzeichnet, daß**
ein aus dem Wegefächer entfernter Alternativweg durch einen Alternativweg aus der ersten Passiv-Menge ersetzt wird.

## Claims

1. Method for dynamic traffic routing in a communication network, wherein
a) calls between an originating switching node and a destination switching node are first offered to at least one or a number of preferred scheduled paths
b) calls according to a specific selection pattern are offered to alternate paths contained in a path fan when none of the scheduled paths is available
c) overflowing calls are offered to an alternate path selected from the path fan for receiving overflowing calls up to a predetermined maximum number, before switching to the next alternate path according to the selection pattern
d) an alternate path previously contained in said path fan is removed from said path fan when the call offering determines that it is no longer available
e) said path fan is reinitialised after an occurrence of specific event or fulfilment of a specific condition,
**characterised in that**
f) the number of calls offered to the alternate path for determining the non-availability is counted,
g) the removed alternate path is accepted in a first passive set of alternate paths if the said number lies below a specific value
h) the removed alternate path is accepted in a second passive set of alternate paths, if the said number reaches or exceeds the specific value
i) the path fan is re-initialised, in which alternate paths from the first passive set are again accepted into the path fan, in which
j) the path fan is reinitialised, in which alternate paths from the second passive set are again accepted in the path fan, if the path fan with alternate paths from the first passive set alone cannot fulfil a specific minimum value.

2. Method according to claim 1
**characterised in that**
the specific value is identical to one.

3. Method according to claim 1 or 2
**characterised in that**
a) the time sequence, after which the alternate paths are removed from the path fan, is retained
b) this time sequence is considered in the event of re-initialisation.

4. Method according to one of claims 1 to 3
**characterised in that**
an alternate path removed from the path fan is not replaced.

5. Method according to one of claims 1 to 3
**characterised in that**
an alternate path removed from the path fan is replaced by an alternate path from the first passive set.

## Revendications

1. Procédé de routage dynamique du trafic dans un réseau de communication, selon lequel
a) des appels entre un noeud de commutation source et un noeud de commutation de destination sont offerts tout d'abord à un ou plusieurs chemins planifiés préférentiels,
b) si aucun des chemins préférentiels n'est disponible, des appels sont offerts, selon un schéma de sélection déterminé, à des chemins alternatifs qui sont contenus dans un éventail de chemins,
c) des appels de débordement étant offerts, jusqu'à concurrence d'un nombre maximal prédéterminé, à un chemin alternatif sélectionné hors de l'éventail de chemins pour le trafic de débordement avant de passer au chemin alternatif suivant selon le schéma de sélection,
d) un chemin alternatif jusqu'à présent contenu dans l'éventail de chemins étant retiré de l'éventail de chemins dès qu'il est constaté, lors de l'offre d'un appel, qu'il n'est plus disponible,
e) l'éventail de chemins étant réinitialisé après la survenance d'un événement déterminé et/ou la satisfaction d'une condition déterminée,
**caractérisé en ce que**
f) on compte le nombre des appels offerts au chemin alternatif jusqu'à constatation de la non-disponibilité,
g) le chemin alternatif retiré est admis dans un premier ensemble passif de chemins alternatifs lorsque ledit nombre est inférieur à une valeur déterminée,
h) le chemin alternatif retiré est admis dans un deuxième ensemble passif de chemins alternatifs lorsque ledit nombre atteint ladite valeur ou la dépasse,
i) l'éventail de chemins est réinitialisé par réadmission de chemins alternatifs dans l'éventail de chemins à partir du premier ensemble passif,
j) l'éventail de chemins est réinitialisé par réadmission de chemins alternatifs dans l'éventail de chemins y compris à partir du deuxième ensemble passif lorsque l'éventail de chemins ne peut pas être entièrement reconstitué, jusqu'à concurrence d'un nombre minimal déterminé, uniquement avec des chemins alternatifs tirés du premier ensemble passif.

2. Procédé selon la revendication 1,
**caractérisé en ce que**
la valeur déterminée est égale à un.

3. Procédé selon la revendication 1 ou 2,
**caractérisé en ce que**
a) on retient l'ordre temporel selon lequel les chemins alternatifs sont retirés de l'éventail de chemins,
b) il est tenu compte de cet ordre temporel en cas de réinitialisation.

4. Procédé selon l'une des revendications 1 à 3,
**caractérisé en ce**
**qu'**un chemin alternatif retiré de l'éventail de chemins n'est pas remplacé.

5. Procédé selon l'une des revendications 1 à 3,
**caractérisé en ce**
**qu'**un chemin alternatif retiré de l'éventail de chemins est remplacé par un chemin alternatif tiré du premier ensemble passif.
